# EUROPEAN PATENT APPLICATION

(11) **EP 4 674 930 A1**
(43) Date of publication of application: **07.01.2026**
(21) Application number: 24856643.2
(22) Date of filing: 09.07.2024
(51) Int. Cl.: C10G 1/00, C10G 1/10, C10G 7/00, C10G 9/00

(54) **METHOD OF PREPARING PYROLYSIS OIL FROM WASTE PLASTICS**

(30) Priority: 23.08.2023 KR 20230110204
(71) Applicant: LG CHEM, LTD., Seoul 07336 (KR)
(72) Inventor: JEONG, Jun Kyo, Daejeon 34122 (KR); LEE, Sang Beom, Daejeon 34122 (KR); LEE, Sung Ho, Daejeon 34122 (KR); NA, Su Jin, Daejeon 34122 (KR); PARK, Jong Seong, Daejeon 34122 (KR)
(74) Representative: Goddar, Heinz J.
(86) International application number: PCT/KR2024/009720
(87) International publication number: WO 2025/042029

(57) **Abstract**

The present invention provides a method of preparing pyrolysis oil from waste plastics, the method including: (S1) feeding a waste plastic raw material to a first reactor, performing primary pyrolysis, and discharging a upper gaseous stream produced by the pyrolysis through an upper portion of the first reactor; (S2) feeding the upper gaseous stream of the first reactor to one or more distillation columns and separating the upper gaseous stream according to boiling point to obtain a stream containing C₅₋₁₂ light oil (LO), a stream containing C₁₃₋₂₂ middle oil (MO), and a stream containing C₂₃ or higher heavy oil (HO), respectively; (S3) feeding a portion of the stream containing the middle oil (MO) separated in the distillation column to a second reactor, performing secondary pyrolysis, and feeding a gaseous stream produced by the pyrolysis to the distillation column; and (S4) recycling the stream containing the heavy oil (HO) separated in the distillation column to the first reactor.

## Description

### [Technical Field]

### CROSS-REFERENCE TO RELATED APPLICATION

The present application claims the benefit of priority to Korean Patent Application No. 10-2023-0110204, filed on August 23, 2023, the entire contents of which are incorporated herein by reference.

### Technical Field

The present invention relates to a method of preparing pyrolysis oil from waste plastics, and more particularly, to a method of preparing light hydrocarbon oil with a high yield from a waste plastic raw material.

### [Background Art]

Recently, the development and use of plastics having physical properties required for various applications and purposes have increased. Plastics require a lot of energy from crude oil extraction to preparation, and a large amount of carbon is emitted in the process. Furthermore, even when plastics used in various products are discarded, environmental pollution and enormous disposal costs occur, and thus, recycling of waste plastics has become an important social issue.

In general, methods of recycling waste plastics (resins) include mechanical recycling, chemical recycling, and thermal recycling. Mechanical recycling is a method of crushing and selecting collected waste plastics, separating the waste plastics by type, melting the waste plastics using an extruder, and mixing the waste plastics with a new material at a certain ratio or adding a functional additive when pelletizing the waste plastics to produce a resin product. Chemical recycling is a method of extracting only a specific polymer using various chemical means, or recovering and repolymerizing pure single molecules. Thermal recycling is a method of burning waste plastics and recovering the waste plastics as heat energy.

In particular, chemical recycling may reduce greenhouse gases compared to incineration of waste plastics and has recently received attention in terms of alternative fuel development.

For example, when a waste plastic such as a polyethylene or polypropylene material is heated and pyrolyzed at a certain temperature, a gaseous stream containing a mixture of non-condensable gas and liquid oil may be produced, and highly viscous residual wax that is not completely decomposed may be discharged. In accordance with an increase in the importance of liquid oil in the pyrolysis product as a raw material for producing a petrochemical product, studies to increase the yield of the liquid oil have been actively conducted.

The liquid oil produced by the pyrolysis of waste plastics, that is, pyrolysis oil, is usually mixed oil including C₅₋₁₂ light hydrocarbon oil such as naphtha and longer-chain hydrocarbon oil. When a large amount of high-boiling point components are included in such mixed oil, the yield of high-value-added light hydrocarbon oil is limited, and the amount of heavy oil components produced and the amount of residual wax discharged are excessive.

In order to solve these problems, a method of performing a contact decomposition reaction by catalytic cracking during pyrolysis of waste plastics, a method of condensing heavy hydrocarbon (that is, long-chain hydrocarbon) components in a pyrolysis product of waste plastics using a contactor, which is a contact heat exchanger, and then circulating the components to a pyrolysis reactor so that the components are subjected to the pyrolysis process again, and the like have been proposed. However, these methods are limited in improving pyrolysis efficiency of waste plastics, and therefore are only used for recycling of mixed oil.

In particular, the contactor may be disposed above the pyrolysis reactor to improve selectivity only for pyrolysis oil components in a specific boiling point range (for example, long-chain hydrocarbons at 240 to 280°C).

Therefore, there is a need to develop a technique capable of improving a pyrolysis process of waste plastics and improving a yield of high-quality light hydrocarbon oil.

### [Disclosure]

### [Technical Problem]

In order to solve the problems mentioned in the background art, an object of the present invention relates to a method of improving a yield of light hydrocarbon oil by connecting one or more distillation columns in series instead of a contactor (heat exchanger) to an upper portion of a reactor for pyrolyzing waste plastics, separating high-boiling point components in a pyrolysis product into middle oil (MO) and heavy oil (HO), and then performing additional pyrolysis.

### [Technical Solution]

In one general aspect, a method of preparing pyrolysis oil from waste plastics includes (S1) feeding a waste plastic raw material to a first reactor, performing primary pyrolysis, and discharging a gaseous stream produced by the pyrolysis through an upper portion of the first reactor; (S2) feeding the upper gaseous stream of the first reactor to one or more distillation columns and separating the upper gaseous stream according to boiling point to obtain a stream containing C₅₋₁₂ light oil (LO), a stream containing C₁₃₋₂₂ middle oil (MO), and a stream containing C₂₃ or higher heavy oil (HO), respectively; (S3) feeding a portion of the stream containing the middle oil (MO) separated in the distillation column to a second reactor, performing secondary pyrolysis, and feeding a gaseous stream produced by the pyrolysis to the distillation column; and (S4) recycling the stream containing the heavy oil (HO) separated in the distillation column to the first reactor.

### [Advantageous Effects]

According to the present invention, the pyrolyzed gaseous stream is separated according to boiling point in one or more distillation columns connected in series to the first reactor for pyrolyzing a waste plastic raw material, and then, a portion of the middle oil (MO) among the separated components is subjected to secondary pyrolysis in the second reactor, while the heavy oil (HO) is recycled to the first reactor, such that the yield of high-quality light oil (LO) may be improved.

In addition, as the pyrolysis in the first reactor and the pyrolysis in the second reactor are performed under gradually increasing temperature conditions, the decomposition efficiency of the waste plastics is improved, such that the yield of high-quality light hydrocarbon oil may be increased, and the discharge of underutilized residual wax may be minimized.

In addition, the upper operating temperature of the distillation column is adjusted to a predetermined range, such that a fraction of the light oil (LO) component in the gaseous stream separated in the distillation column may be increased, and in the process in which the gaseous stream exchanges heat with water in a condenser connected to the upper portion of the distillation column to obtain a liquid phase, the water fed to the condenser may be converted into steam by recovering the waste heat of the gaseous stream.

Furthermore, the use of the light hydrocarbon oil obtained from the pyrolysis of waste plastics may reduce greenhouse gas emissions caused when feeding a raw material in a petrochemical process, may improve process efficiency such as energy consumption saving, and may be environmentally advantageous as no harmful gases are produced when processing waste plastics.

### [Description of Drawings]

FIG. 1 illustrates a pyrolysis process of waste plastics according to an example of the present invention.
FIG. 2 illustrates a pyrolysis process of waste plastics according to a comparative example.

### [Best Mode]

The terms and words used in the description and claims of the present invention are not to be construed limitedly as having general or dictionary meanings but are to be construed as having meanings and concepts meeting the technical idea of the present invention, based on a principle that the inventors are able to appropriately define the concepts of terms in order to describe their own inventions in the best mode.

The meaning of "including" or "containing" used in the present application concretely specifies a specific property, region, integer, step, operation, element, and/or component, and does not exclude addition of another specific property, region, integer, step, operation, element, and/or component.

The term "stream" used in the present application may refer to a flow of a fluid in a process, and may also refer to a fluid flowing through a pipe itself. Specifically, the stream may refer to both a fluid flowing through a pipe connecting respective devices to each other itself and a flow of a fluid. In addition, the fluid may include any one or more components of gas, liquid, and solid.

The term "Cₙ" used in the present application refers to all hydrocarbons having n carbon atoms, and for example, "C₅₋₁₂" refers to all hydrocarbon molecules having 5 to 12 carbon atoms.

The term "liquid oil" used in the present application refers to a product obtained by converting a gaseous stream obtained in a pyrolysis step into a liquid phase by condensation, and may also be referred to as "liquid distilled oil".

In addition, the "pressure" referred to in the present application refers to an absolute pressure measured based on a complete vacuum.

According to an embodiment of the present invention, a method of preparing pyrolysis oil from waste plastics include (S1) subjecting a waste plastic raw material to primary pyrolysis; (S2) separating a pyrolyzed gaseous stream according to boiling point; (S3) subjecting a portion of separated middle oil to secondary pyrolysis; and (S4) recycling separated heavy oil to the raw material pyrolysis.

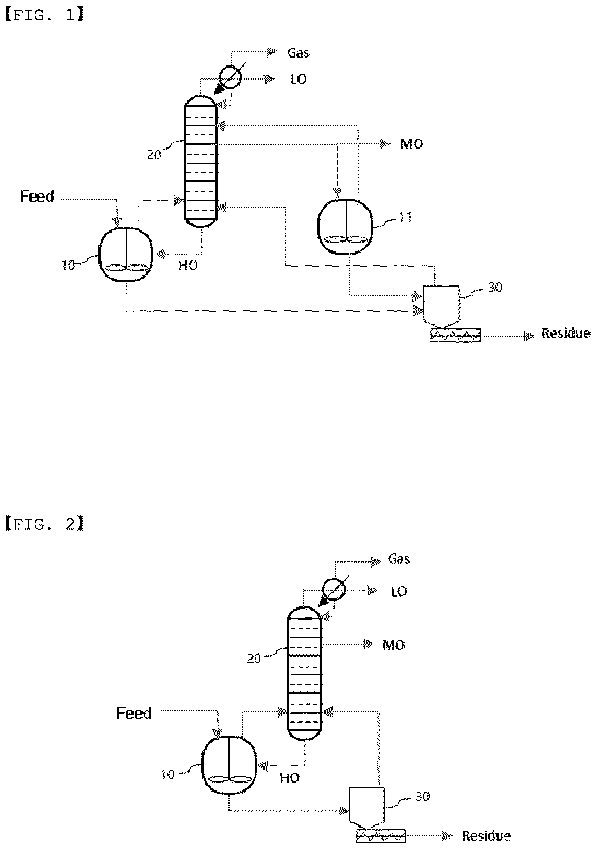

As illustrated in FIG. 1, the method may be performed using a process system including a first reactor 10 to which a waste plastic raw material is fed, one or more distillation columns 20 connected in series to the first reactor, a second reactor 11 connected to the distillation column 20, and a residue treatment reactor 30.

Hereinafter, the method of preparing pyrolysis oil from waste plastics according to the present invention will be described in detail for each step with reference to the drawings.

First, a waste plastic raw material is fed to the first reactor 10, primary pyrolysis is performed, and a gaseous stream produced by the pyrolysis is discharged through an upper portion of the first reactor 10 (S1).

The waste plastics may include a natural polymer, a synthetic polymer, or a mixture thereof, and the synthetic polymer may include thermoplastic resins such as polyethylene, polypropylene, and polystyrene. In addition, the thermoplastic resin may be a mixture of other types of resins such as PVC and PET, a thermosetting resin, and the like.

The waste plastics such as these materials may be subjected to, after collecting and selecting, a pretreatment process including crushing, washing, drying, and melting. The pretreatment process may be performed by a general method in the art.

For example, a size of crushed waste plastic is not particularly limited, but the waste plastics may typically be crushed in a size range of 0.5 to 6.0 cm, and then, the washed and dried waste plastic crushed material may be put into a tubular melter such as an extruder and then melted. The extruder has an extrusion function by melting and kneading, and may be, for example, a twin-screw extruder. When the waste plastic is a thermoplastic resin such as polyethylene, polypropylene, or a mixture thereof, a melting temperature may be 120 to 350°C or 150 to 250°C, but is not limited thereto.

The waste plastic melt obtained by the pretreatment process is fed to the first reactor for pyrolysis.

The pyrolysis reactor that may be used in the present invention may be a stirred tank reactor equipped with an agitator, the agitator is not particularly limited as long as it may sufficiently agitate the waste plastic melt fed as a raw material, and may be, for example, a helical ribbon type or an anchor type, and it is advantageous to maintain a gap of about 5 mm to 1 cm from an inner wall of the reactor to maximize agitation of the waste plastics and heat transfer through the wall of the reactor. In addition, the reactor may be operated in either a batch type or continuous type. In addition, the reactor may be purged with nitrogen to maintain an oxygen-free or low-oxygen atmosphere while performing a pyrolysis reaction of the waste plastic melt.

The waste plastic melt is fed to the first reactor equipped with the agitator and heated while operating the agitator to perform pyrolysis of the waste plastic melt.

The heating of the waste plastics may be performed by transferring high-temperature heat to the waste plastics by passing high-temperature/high-pressure steam, hot water, heat transfer fluid, or the like through a jacket provided on the outside of the reactor, but is not particularly limited thereto.

In an embodiment of the present invention, the primary pyrolysis in the first reactor may be performed at 400 to 450°C. The waste plastic raw material is mainly a thermoplastic resin, and for example, considering that the waste plastic raw material may be a mixture containing polyethylene having a number average molecular weight of 10,000 to 500,000, and specifically, 100,000 to 300,000, or polypropylene having a number average molecular weight of 5,000 to 300,000, and specifically, 10,000 to 200,000, the pyrolysis reaction is advantageously performed at 400 to 450°C, and specifically, 420 to 430°C. When the primary pyrolysis temperature is lower than 400°C, a pyrolysis rate may be slow, and when the primary pyrolysis temperature is higher than 450°C, the pyrolysis rate may be fast, but an excessive amount of solid carbides such as char may be produced due to a high temperature.

In addition, the primary pyrolysis in the first reactor may be performed at a pressure of 0.9 to 1.1 bar for 1 to 5 hours, and specifically, 2 to 4 hours. The primary pyrolysis reaction time may be determined by considering the time when a production rate of light hydrocarbons having 12 or fewer carbon atoms increases in a temperature range of 400 to 450°C after the start of the pyrolysis reaction of waste plastics.

When the waste plastic raw material is pyrolyzed in the first reactor 10, a gaseous stream containing C₁₋₄ gas components, C₅₋₁₂ light hydrocarbons such as naphtha, and longer-chain hydrocarbon components such as C₁₃₋₂₂ hydrocarbon and C₂₃ or higher hydrocarbon components is discharged through the upper portion of the reactor, and highly viscous residual wax is not vaporized and remains at a lower portion of the reactor.

Subsequently, the gaseous stream discharged through the upper portion of the first reactor 10 is fed to one or more distillation columns 20 and separated according to boiling point (S2).

The one or more distillation columns 20 may be disposed in series above the first reactor 10, and may separate the pyrolysis product transferred from the first reactor into components according to boiling point by selective heating and condensation. For example, the stream fed to each distillation column may be heated by heat provided from the reactor connected to a lower portion of the column, steam generated by the heating may move to an upper portion of the column and then discharged, and the discharged steam may be partially or completely condensed in a condenser connected to the upper portion of the column. A portion of the condensate may be recycled into the column.

Unlike the application of a contactor (heat exchanger) to the pyrolysis reactor in the existing waste plastic pyrolysis process, in the present invention, one or more distillation columns may be disposed above the first reactor, a pyrolysis product may be separated according to boiling point, high-boiling point oil discharged through the middle or lower portion of the distillation column may be selectively recycled to the first reactor or fed to the second reactor, and then, an additional pyrolysis reaction may be performed, thereby improving the yield of light oil (LO).

In addition, in the present invention, the carbon range of the desired pyrolysis oil (distilled oil) may be changed by adjusting an upper operating temperature of the distillation column.

Specifically, when the upper operating temperature of the distillation column is increased, the carbon range of the pyrolysis oil moves to a high boiling point, and when the upper operating temperature of the distillation column is lowered, the carbon range of the pyrolysis oil moves to a low boiling point, which may increase the yield of light oil such as naphtha.

For example, the upper portion temperature of the distillation column is adjusted to 220°C to 300°C, a gaseous stream containing 80% or more of C₅₋₁₂ low-boiling point hydrocarbons and C₁₃₋₂₂ medium-boiling point hydrocarbons may be discharged. Meanwhile, when the upper portion temperature of the distillation column is adjusted to 150°C to lower than 220°C, a gaseous stream containing 70% or more of C₅₋₁₂ low-boiling point hydrocarbons may be discharged. The gaseous stream may be cooled and condensed by heat exchange with water connected to the upper portion of the distillation column and converted into liquid oil, and gas components (for example, C₁₋₄ hydrocarbons) that are not condensed in the heat exchange may be discharged through the upper portion. In this case, some components included in the condensed liquid oil, that is, the medium-boiling point or high-boiling point components, may be refluxed to the upper portion of the distillation column and move to the lower portion of the distillation column. As a result, C₅₋₁₂ light oil (LO) may be discharged from an upper tray of the column, C₁₃₋₂₂ middle oil (MO) may be discharged from a middle tray of the column, and C₂₃ or higher, for example, C₂₃₋₄₀, heavy oil (HO) may be discharged from a lower tray of the column.

In addition, a dividing-wall distillation column (DWC) including two sections divided by a central dividing wall may be used as the distillation column 10, and a stream containing C₅₋₁₂ light hydrocarbons may be separated through an upper portion of the DWC, a stream containing C₁₃₋₂₂ medium hydrocarbons may be separated through a side portion of the DWC, and a stream containing C₂₃ or higher high-boiling point hydrocarbons may be separated through a lower portion of the DWC.

Meanwhile, when a plurality of distillation columns 10 are disposed, the operation may be performed by setting the temperatures of the condensers connected to the upper portions of the respective columns differently. That is, the carbon range of the pyrolysis oil (distilled oil) may be changed by setting the upper portion temperature of the upstream column to be relatively high and the upper portion temperature of the downstream column to be relatively low. For example, the upper portion temperature of the upstream column may be adjusted to 220°C to 300°C, and the upper portion temperature of the downstream column may be adjusted to 150°C to lower than 220°C. As described above, the upper gaseous stream discharged from each of the upstream and downstream columns may be condensed and then discharged as liquid oil, or a portion of the upper gaseous stream may be refluxed to the upper portion of each column. In addition, C₁₃₋₂₂ middle oil (MO) or C₂₃ or higher heavy oil (HO) may be selectively discharged through the middle portion and the lower portion of each column.

As such, the gaseous stream produced by the primary pyrolysis of the waste plastic raw material may be separated according to boiling point in the one or more distillation columns to obtain a stream containing C₅₋₁₂ light oil (LO), a stream containing C₁₃₋₂₂ middle oil (MO), and a stream containing C₂₃ or higher heavy oil (HO).

In addition, in the process in which the gaseous stream exchanges heat with water to obtain a liquid phase in the condenser connected to the upper portion of the distillation column, the water fed to the condenser may be converted into steam by recovering waste heat of the gaseous stream.

In order to generate steam by recovering such waste heat, in the present invention, hot water at 60 to 100°C is used as water for heat exchange in the condenser disposed above the distillation column. The temperature of the water may be adjusted depending on the desired pyrolysis oil composition.

In particular, when the plurality of distillation columns are disposed, as described above, the condenser of the upstream column is operated at a high temperature and the condenser of the downstream column is operated at a low temperature, such that steam may be generated at different pressures. For example, when the upper operating temperature of the distillation column is set to be high and the carbon range of the pyrolysis oil moves to a high boiling point, high-pressure steam may be generated through heat absorption of the condenser connected to the upper portion of the column. Meanwhile, when the upper operating temperature of the distillation column is set to be low and the carbon range of the pyrolysis oil moves to a low boiling point, low-pressure steam may be generated.

Thereafter, a portion of the stream containing C₁₃₋₂₂ middle oil (MO) separated from the distillation column 20 is fed to the second reactor 11, secondary pyrolysis is performed, and a gaseous stream produced by the pyrolysis is fed to the distillation column 20 (S3).

The second reactor 11 may be disposed in series with the distillation column 20. That is, the first reactor 10 is disposed on one side of the distillation column 20, and the second reactor 11 is disposed on the other side of the distillation column 20, such that the first reactor, the distillation column, and the second reactor may be disposed in series in order.

The pyrolysis of the portion of the middle oil (MO) in the second reactor may be performed at a higher temperature than the pyrolysis of the waste plastic raw material performed in the first reactor. That is, in the present invention, in order to increase the decomposition efficiency of the waste plastics, it is advantageous to perform the pyrolysis in the first reactor and the pyrolysis in the second reactor under gradually increasing temperature conditions.

In an embodiment of the present invention, the temperature of the secondary pyrolysis in the second reactor 11 may be in a range of 420°C to 450°C, and when the secondary pyrolysis is performed at a higher temperature than the primary pyrolysis, the production of light oil (LO) according to decomposition of the middle oil (MO) may be further increased. When the secondary pyrolysis temperature is lower than 420°C, it is difficult to induce sufficient pyrolysis of the middle oil (MO), and when the secondary pyrolysis temperature is higher than 450°C, the formation of solid carbides such as char may be accelerated.

In addition, the secondary pyrolysis may be performed at a pressure of 0.9 to 1.1 bar for 1 to 3 hours, and specifically, 1.5 to 2.5 hours. The secondary pyrolysis reaction time may be determined by considering the time when a production rate of light hydrocarbons having 12 or fewer carbon atoms increases after the start of the decomposition reaction of the middle oil (MO).

Through the secondary pyrolysis, sufficient pyrolysis of the C₁₃₋₂₂ middle oil (MO) obtained from the waste plastic raw material may be induced and the C₁₃₋₂₂ middle oil (MO) may be converted to have a lower carbon number, and through this, the yield of finally obtained C₅₋₁₂ light oil (LO) may be increased.

Meanwhile, the stream containing C₂₃ higher heavy oil (HO) separated from the distillation column 20 is recycled to the first reactor 10 (S4).

The heavy oil (HO) contained in the gaseous product obtained by the primary pyrolysis of the waste plastic raw material is a high-boiling point hydrocarbon having a boiling point of 360°C or higher, and may be discharged through the lower portion of the distillation column. The stream containing high-boiling point heavy oil may be transferred to the first reactor and pyrolyzed again to be converted into C₅₋₁₂ light oil (LO) and C₁₃₋₂₂ middle oil (MO).

In addition, each of a lower residue of the first reactor 10 and a lower residue of the second reactor 11 may be fed to the residue treatment reactor 30, and additional pyrolysis may be performed.

The residue treatment reactor 30 may include an upper section in which a pyrolysis reaction is performed and a lower section from which highly viscous residual wax is discharged.

In the upper section of the residue treatment reactor, the lower residue of the first reactor and the lower residue of the second reactor may be fed and additional pyrolysis may be performed, and in this case, the additional pyrolysis is preferably performed at a higher temperature than the pyrolysis in the first reactor or the second reactor.

In addition, the additional pyrolysis in the residue treatment reactor may be performed at a pressure of 0.9 to 1.1 bar for 1 to 3 hours, and specifically, 1.5 to 2.5 hours. The additional pyrolysis reaction time may be determined by considering the time when a production rate of low-boiling point hydrocarbons increases after the start of the decomposition reaction of the residue.

The pyrolysis oil obtained from the above pyrolysis process may include a high fraction of high-value-added C₅₋₁₂ light oil (LO). For example, a content of the finally obtained C₅₋₁₂ light oil (LO) may be 50 to 70 wt%, and specifically, 50 to 60 wt%, with respect to the weight of the waste plastic raw material. The C₅₋₁₂ light hydrocarbons obtained with a high yield may be condensed and then efficiently used as high-quality fuel oil.

In particular, in the present invention, the finally obtained C₅₋₁₂ light hydrocarbon fuel oil has a boiling point of 0 to 230°C, and specifically, 30 to 216°C, a kinematic viscosity at 40°C of 0.3 to 1.0 cSt, and specifically, 0.4 to 0.9 cSt, and a flash point of -80°C or higher (for example, -40°C), and may thus be efficiently used as a petrochemical raw material.

According to the present invention as described above, the pyrolyzed gaseous stream is separated according to boiling point in one or more distillation columns connected in series to the first reactor for pyrolyzing a waste plastic raw material, and then, a portion of the middle oil (MO) among the separated components is subjected to secondary pyrolysis in the second reactor, while the heavy oil (HO) is recycled to the first reactor, such that the yield of high-quality light oil (LO) may be improved.

In addition, as the pyrolysis in the first reactor and the pyrolysis in the second reactor are performed under gradually increasing temperature conditions, the decomposition efficiency of the waste plastics is improved, such that the yield of high-quality light hydrocarbon oil may be increased, and the discharge of underutilized residual wax may be minimized.

In addition, the upper operating temperature of the distillation column is adjusted to a predetermined range, such that a fraction of the light oil (LO) component in the gaseous stream separated in the distillation column may be increased, and in the process in which the gaseous stream exchanges heat with water in the condenser connected to the upper portion of the distillation column to obtain a liquid phase, the water fed to the condenser may be converted into steam by recovering the waste heat of the gaseous stream.

Furthermore, the use of the light hydrocarbon oil obtained from the pyrolysis of waste plastics may reduce greenhouse gas emissions caused when feeding a raw material in a petrochemical process, may improve process efficiency such as energy consumption saving, and may be environmentally advantageous as no harmful gases are produced when processing waste plastics.

### [Mode for Invention]

Hereinafter, the present invention will be described in more detail with reference to examples. However, the following examples are provided for illustrating the present invention. It is apparent to those skilled in the art that various modifications and alterations may be made without departing from the scope and spirit of the present invention, and the scope of the present invention is not limited thereto.

### Example 1:

As illustrated in FIG. 1, pyrolysis of waste plastics was performed using a process system including a first reactor 10, a distillation column 20, a second reactor 11, and a residue treatment reactor 30.

First, 100 parts by weight of a waste plastic melt containing polyethylene (PE) and polypropylene (PP) at a weight ratio of 6:4 was fed to a stirred first reactor 10, the reactor 10 was heated by an external heating means, and when the temperature reached 430°C, a primary pyrolysis reaction was performed for 4 hours while maintaining a constant temperature.

A gaseous stream discharged through an upper portion of the first reactor 10 was fed to the distillation column 20 and separated into components according to boiling point. Specifically, the column was operated at an upper portion temperature of 210°C, the gaseous stream was discharged through the upper portion and cooled to 25°C in a condenser to obtain condensed liquid C₅₋₁₂ light oil (LO), and noncondensed gas components were discharged. Subsequently, a stream containing C₁₃₋₂₂ middle oil (MO) was obtained in a middle tray of the column, and a lower stream containing C₂₃₋₄₀ heavy oil (HO) was discharged from a lower tray of the column.

A portion of the middle oil (MO) separated from the distillation column 20 was fed to the second reactor 11, secondary pyrolysis was performed at 430°C for 2 hours, and a gaseous stream produced by the secondary pyrolysis was recycled to the distillation column 20.

Meanwhile, a lower discharge stream of the distillation column 20 was recycled to the first reactor 10 for further pyrolysis.

In addition, each of a lower residue of the first reactor 10 and a lower residue of the second reactor 11 was fed to the residue treatment reactor 30, additional pyrolysis was performed at 450°C for 2 hours, an upper gaseous stream produced was recycled through the lower portion of the distillation column 20, and the residue remaining at the lower portion was discharged.

### Example 2:

The same process as that of Example 1 was performed, except that secondary pyrolysis of a portion of the middle oil (MO) was performed at 440°C for 2 hours in the second reactor 11.

### Example 3:

The same process as that of Example 1 was performed, except that secondary pyrolysis of a portion of the middle oil (MO) was performed at 450°C for 2 hours in the second reactor 11.

### Comparative Example 1:

As illustrated in FIG. 2, pyrolysis of waste plastics was performed using a process system including a first reactor 10, a distillation column 20, and a residue treatment reactor 30. Specifically, the same process as that of Example 1 was performed, except that secondary pyrolysis was not performed on a portion of the middle oil (MO) separated in the distillation column 20.

Table 1 shows the composition (wt% based on the raw material feeding amount) of the pyrolysis product obtained based on the feed in the examples and comparative example analyzed by GC-MS.

**[Table 1]**

| | Primary pyrolysis product | Secondary pyrolysis product | Final pyrolysis oil composition |
|---|---|---|---|
| Example 1 (430°C, 4h/ 430°C, 2h) | Gas 9 | Gas 2 | Gas 11 |
| | LO 48 | LO 6 | **LO 54** |
| | MO 37 (Among them, MO 30 is fed to the second reactor) | MO 22 | MO 29 |
| | Residue 6 | - | Residue 6 |
| Example 2 (430°C, 4h/ 440°C, 2h) | Gas 9 | Gas 3 | Gas 12 |
| | LO 48 | LO 8 | **LO 56** |
| | MO 37 (Among them, MO 30 is fed to the second reactor) | MO 19 | MO 26 |
| | Residue 6 | - | Residue 6 |
| Example 3 (430°C, 4h/ 450°C, 2h) | Gas 9 | Gas 4 | Gas 16 |
| | LO 48 | LO 10 | **LO 58** |
| | MO 37 (Among them, MO 30 is fed to the second reactor) | MO 16 | MO 23 |
| | Residue 6 | - | Residue 6 |
| Comparative Example 1 (430°C 4h) | Gas 9 | | Gas 9 |
| | LO 48 | | **LO 48** |
| | MO 37 | | MO 37 |
| | Residue 6 | | Residue 6 |

As can be seen from Table 1, in Examples 1 to 3 in which the pyrolyzed gaseous stream was separated according to boiling point in one or more distillation columns connected in series to the first reactor for pyrolyzing a waste plastic raw material, and then, a portion of the middle oil (MO) among the separated components was subjected to secondary pyrolysis in the second reactor, the yield of low-boiling point light oil (LO) was improved compared to Comparative Example 1 in which secondary pyrolysis was not performed.

In addition, in Examples 2 and 3 in which the primary pyrolysis and the secondary pyrolysis were performed under stepwisely increasing temperature conditions, light oil was obtained with a further improved yield than Example 1 in which the primary pyrolysis and the secondary pyrolysis was performed at the same temperature.

## Claims

1. A method of preparing pyrolysis oil from waste plastics, the method comprising:
(S1) feeding a waste plastic raw material to a first reactor, performing primary pyrolysis, and discharging a gaseous stream produced by the pyrolysis through an upper portion of the first reactor;
(S2) feeding the upper gaseous stream of the first reactor to one or more distillation columns and separating the upper gaseous stream of the first reactor according to boiling point to obtain a stream containing light oil (LO) of C₅₋₁₂, a stream containing middle oil (MO) of C₁₃₋₂₂, and a stream containing heavy oil (HO) of C₂₃ or higher;
(S3) feeding a portion of the stream containing the middle oil (MO) separated in the distillation column to a second reactor, performing secondary pyrolysis, and feeding a gaseous stream produced by the pyrolysis to the distillation column; and
(S4) recycling the stream containing the heavy oil (HO) separated in the distillation column to the first reactor.

2. The method of claim 1, wherein the first reactor, the distillation column, and the second reactor are connected in series.

3. The method of claim 1, wherein the stream containing the light oil (LO) is separated into a gas phase at an upper portion of the distillation column, and then exchanges heat with water in a condenser and is recovered as liquid light oil (LO).

4. The method of claim 3, wherein water fed to the condenser is hot water at 60 to 100°C, and waste heat of the gaseous stream is recovered through the heat exchange and converted into steam.

5. The method of claim 1, wherein an upper portion temperature of the distillation column is adjusted to 150°C to lower than 220°C to discharge an upper gaseous stream of the distillation column containing 70% or more of C₅₋₁₂ light hydrocarbons.

6. The method of claim 1, wherein the pyrolysis in the first reactor and the pyrolysis in the second reactor are performed under stepwisely increasing temperature conditions.

7. The method of claim 6, wherein the pyrolysis in the first reactor is performed at 400 to 450°C.

8. The method of claim 6, wherein the pyrolysis in the second reactor is performed at 420 to 450°C.

9. The method of claim 1, wherein each of a lower residue of the first reactor and a lower residue of the second reactor are fed to a residue treatment reactor, additional pyrolysis is performed, and a gaseous stream produced by the pyrolysis is recycled to the distillation column.

10. The method of claim 9, wherein the pyrolysis in the residue treatment reactor is performed at a temperature higher than pyrolysis temperatures of the first reactor or the second reactor.

11. The method of claim 1, wherein a content of the light oil (LO) is 50 to 70 wt% with respect to the weight of the waste plastic raw material.

12. The method of claim 1, wherein the waste plastic raw material is a mixture containing polyethylene (PE) or polypropylene (PP).

13. The method of claim 1, wherein the waste plastic raw material is fed to the pyrolysis reactor after performing a pretreatment process including crushing, washing, drying, and melting.
